# EUROPÄISCHE PATENTSCHRIFT

(11) **EP 3 110 698 B1**
(45) Veröffentlichungstag und Bekanntmachung des Hinweises auf die Patenterteilung: **12.08.2020**
(21) Anmeldenummer: 15701338.4
(22) Anmeldetag: 23.01.2015
(51) Int. Cl.: B65B 35/38, B65B 35/40, B65B 43/48, B65G 47/84, B65G 47/91

(54) **VORRICHTUNG ZUR ÜBERGABE VON GEGENSTÄNDEN**
DEVICE FOR TRANSFERRING OBJECTS
DISPOSITIF DE TRANSFERT D'OBJETS

(30) Priorität: 26.02.2014 DE 102014203421
(43) Veröffentlichungstag der Anmeldung: 04.01.2017
(73) Patentinhaber: Syntegon Technology GmbH, 71332 Waiblingen (DE)
(72) Erfinder: GRAF, Sebastian, 74589 Satteldorf (DE); RUCK, Hannes, 74564 Crailsheim (DE); LEIDIG, Juergen, 74586 Frankenhardt (DE)
(74) Vertreter: DREISS Patentanwälte PartG mbB
(86) Internationale Anmeldenummer: PCT/EP2015/051359
(87) Internationale Veröffentlichungsnummer: WO 2015/128132

(56) Entgegenhaltungen:
- EP-A1- 1 100 725
- EP-A1- 2 394 917
- EP-A2- 0 191 158
- CN-A- 102 001 468

## Beschreibung

### Stand der Technik

Die vorliegende Erfindung betrifft eine Vorrichtung zur Übergabe von Gegenständen, insbesondere auf dem technischen Gebiet der Befüllung und Verpackung von medizinischen Behältnissen, wie z.B. Spritzen.

Im Bereich der Medizintechnik sind verschiedenste Verpackungs- und/oder Handhabungsprobleme zu lösen. Ein Beispiel ist hierbei die Handhabung von vorsterilisierten Spritzen, welche üblicherweise in einem Nest (mehrere Spritzen aufnehmender Transportbehälter) angeordnet werden. Hierbei ist es bekannt, die Spritzen mit einem sog. "Zellenriemen" zu vereinzeln, um mittels eines separaten Greifers einzeln aus dem Zellenriemen entnommen zu werden und in das Nest gesetzt zu werden. Diese Ausführung hat sich zwar grundsätzlich bewährt, benötigt jedoch einen relativ großen Bauraum und eine relativ lange Zeitspanne, bis das Nest vollständig mit Spritzen besetzt ist. Es wäre daher wünschenswert, eine Vorrichtung zur Übergabe von Gegenständen, wie z.B. Spritzen, zu haben, welche eine deutliche Verbesserung der Übergabe bereitstellt, als es im Stand der Technik möglich ist.

Aus der EP 1100725 A1 ist bereits eine Vorrichtung zur Übergabe von Ampullen oder dergleichen bekannt. Die Vorrichtung weist ein kontinuierlich gedrehtes Förderrad und einen getaktet angetriebenen Transportrechen auf. Zur Übergabe von der einen in die andere Fördereinrichtung wird vorgeschlagen, zwei Übergaberechen zu verwenden, welche die Ampullen oder dergleichen aus dem Förderrad übernehmen und dem Transportrechen zuführen. Das Überführen erfolgt mittels getrennter Bewegungen der beiden Übergaberechen, wobei sich diese während ihrer Bewegungen teilweise überdecken. Dieses Dokument offenbart eine Vorrichtung zur Übergabe von Gegenständen, umfassend:
- einen Transportstern der sich der Transportstern ausschließlich in einer Richtung dreht, und der mehrere Aufnahmetaschen umfasst,
- eine erste Greifeinheit mit einer ersten Antriebseinheit, und
- eine zweite Greifeinheit mit einer zweiten Antriebseinheit,
- wobei die erste Greifeinheit und die zweite Greifeinheit eingerichtet sind, jeweils eine lineare Bewegung in einer ersten Richtung und eine lineare Bewegung in einer zweiten Richtung, welche senkrecht zur ersten Richtung ist, auszuführen und die Gegenstände aufzunehmen und zu übergeben.

### Offenbarung der Erfindung

Die erfindungsgemäße Vorrichtung zur Übergabe von Gegenständen, insbesondere Behältnissen, wie z.B. sterilisierten Spritzen, weist gegenüber den bekannten Lösungen die Vorteile auf, dass eine sehr kompakte Bauweise möglich ist. Ferner kann eine Übergabe der Gegenstände schneller ausgeführt werden. Dies wird erfindungsgemäß durch eine Vorrichtung gemäß en Merkmalen des Anspruchs 1 erreicht, wobei die Vorrichtung einen Transportstern umfasst, welcher die zu übergebenden Gegenstände aufnimmt und gleich auf die benötigte Teilung bringt. Ferner umfasst die Vorrichtung eine erste und eine zweite Greifeinheit, welche jeweils eine eigene Antriebseinheit aufweisen. Die Antriebseinheiten sind jeweils eingerichtet, die erste und zweite Greifeinheit linear in einer ersten Richtung und linear in einer zweiten Richtung, welche senkrecht zur ersten Richtung ist, zu bewegen, und die Gegenstände vom Transportstern aufzunehmen. Die beiden Greifeinheiten sind dabei derart eingerichtet, dass die vom Transportstern aufgenommenen Gegenstände auf die Greifeinheiten übergeben werden können. Durch die Verwendung von zwei Greifeinheiten kann somit eine Zeit zur Übergabe der Gegenstände vom Transportstern auf die Greifeinheiten halbiert werden. Ein weiterer Vorteil der erfindungsgemäßen Vorrichtung ist ihr modularer Aufbau. Die Verwendung von zwei Greifeinheiten verdoppelt somit die Ausbringung, ohne dass hierbei sehr viel mehr Bauraum benötigt wird. Weiterhin ist auch beispielsweise die Baugröße des Transportsterns gegenüber einem im Stand der Technik verwendeten Zellenriemen wesentlich geringer. Weiter bevorzugt sind die Greifeinheiten aus Materialien hergestellt, welche autoklavierbar bzw. sterilisierbar sind. Dadurch kann insbesondere ein Transport und eine Übergabe von sterilen Gegenständen, wie z.B. Spritzen, ermöglicht werden. Erfindungsgemäß sind die erste und die zweite Greifeinheit am Transportstern einander gegenüberliegend angeordnet. Dadurch können die Bewegungsabläufe der Greifeinheiten einfach ausgestaltet werden und insbesondere ein sich gegenseitiges Stören der Greifeinheiten vermieden werden. Erfindungsgemäß sind die erste und die zweite Greifeinheit am Transportstern einander gegenüberliegend angeordnet. Dadurch können die Bewegungsabläufe der Greifeinheiten einfach ausgestaltet werden und insbesondere ein sich gegenseitiges Stören der Greifeinheiten vermieden werden.

Die Unteransprüche zeigen bevorzugte Weiterbildungen der Erfindung.

Die Antriebseinheiten bewegen die erste und zweite Greifeinheit vorzugsweise linear in einer horizontalen Ebene.

Vorzugsweise weisen die erste und zweite Greifeinheit eine Vielzahl von linear in Reihe angeordneten Aufnahmetaschen zur Aufnahme der Gegenstände auf. Besonders bevorzugt sind die beiden Greifeinheiten gleich aufgebaut.

Erfindungsgemäß sind die erste und die zweite Greifeinheit am Transportstern einander gegenüberliegend angeordnet. Dadurch können die Bewegungsabläufe der Greifeinheiten einfach ausgestaltet werden und insbesondere ein sich gegenseitiges Stören der Greifeinheiten vermieden werden.

Erfindungsgemäß dreht sich der Transportstern ausschließlich in eine Richtung. Hierdurch wird eine besonders einfache und kostengünstige Steuerung des Transportsterns erreicht.

Weiter bevorzugt umfassen die erste und zweite Greifeinheit jeweils Saugeinrichtungen zum Halten der Gegenstände. Hierdurch müssen keine Greifzangen oder dgl. verwendet werden, welche gegebenenfalls die Gegenstände während des Greifvorgangs beschädigen könnten.

Gemäß einer weiteren bevorzugten Ausgestaltung der Erfindung ist die Antriebseinheit eingerichtet, die erste und zweite Greifeinheit zusätzlich senkrecht zur horizontalen Ebene zu bewegen. Somit umfasst die Antriebseinheiten jeweils eine Hub-/Senkeinrichtung, so dass eine Abgabe der Gegenstände in einer anderen Ebene als der Ebene des Transportsterns ermöglicht wird.

Weiter bevorzugt umfasst die Vorrichtung ferner eine Zufuhreinrichtung, welche eingerichtet ist, die Gegenstände in Reihe zum Transportstern zuzuführen. Die Zufuhreinrichtung kann beispielsweise ein Transportband sein, auf welchem die Gegenstände nacheinander in Reihe angeordnet sind.

Gemäß einer weiteren bevorzugten Ausgestaltung der Erfindung umfasst die Vorrichtung ferner eine Abfuhreinrichtung, welche eingerichtet ist, die Gegenstände abzutransportieren. Die Abfuhreinrichtung ist besonders bevorzugt unterhalb der Ebene des Transportsterns angeordnet. Hierdurch kann eine einfache Übergabe auf beispielsweise einen Transportbehälter oder dgl. erfolgen. Weiter bevorzugt ist der Transportstern derart ausgebildet, dass an seinem äußeren Umfang ein erster und zweiter Aufnahmebereich vorgesehen ist, welcher die Gegenstände aufnimmt. In Umfangsrichtung ist zwischen den beiden Aufnahmebereichen dabei ein Leer- bzw. Freibereich vorhanden. Somit kann jeder der Aufnahmebereiche des Transportsterns dabei Gegenstände in einer Anzahl aufnehmen, welche einer aufnehmbaren Anzahl von Gegenständen der Greifeinheiten entspricht.

Weiter bevorzugt wird der Transportstern mit einer konstanten Geschwindigkeit angetrieben. Die Vorrichtung zur Übergabe von Gegenständen wird insbesondere im pharmazeutischen Bereich verwendet. Insbesondere sind die Gegenstände sterilisierte Spritzen, welche in Transportbehälter übergeben werden müssen. Hierbei müssen Gegenstände von der Übergabevorrichtung auch auf die gewünschte Teilung während der Übergabe gebracht werden, damit diese in die Transportbehälter übergeben werden können, welche vordefinierte Abstände zwischen den einzelnen Gegenständen vorgeben.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische, perspektivische Ansicht einer Vorrichtung zur Übergabe von Gegenständen gemäß einem bevorzugten Ausführungsbeispiel der Erfindung, und
- Figuren 2 bis 7: schematische Draufsichten auf die Vorrichtung von Figur 1, welche den Ablauf der Übergabe der Gegenstände in schematischer Weise zeigen.

### Ausführungsform der Erfindung

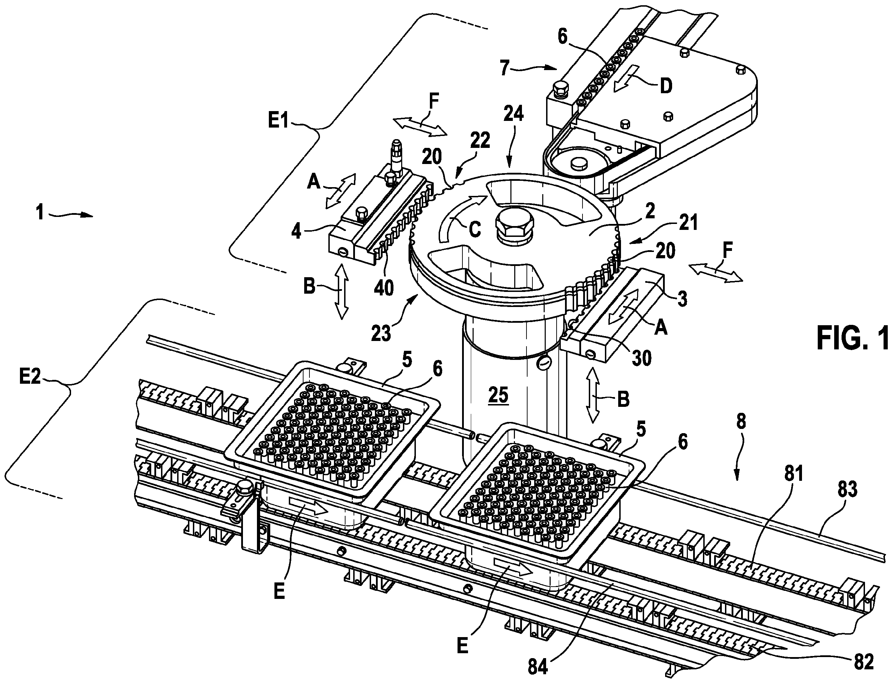

Nachfolgend wird unter Bezugnahme auf die Figuren 1 bis 7 eine Vorrichtung 1 zur Übergabe von Gegenständen 6 im Detail beschrieben.

Wie aus Figur 1 ersichtlich ist, umfasst die Vorrichtung 1 zur Übergabe von Gegenständen einen Transportstern 2, eine erste Greifeinheit 3 und eine zweite Greifeinheit 4. Der Transportstern 2 umfasst mehrere Aufnahmetaschen 20, wobei die Aufnahmetaschen 20 in einem ersten Aufnahmebereich 21 und einem zweiten Aufnahmebereich 22 entlang des Umfangs des Transportsterns 2 angeordnet sind. Zwischen den beiden Aufnahmebereichen 21, 22 sind jeweils Leerbereiche 23, 24 ohne Aufnahmetaschen angeordnet.

Die erste und zweite Greifeinheit 3, 4 sind jeweils gleich aufgebaut. Die beiden Greifeinheiten 3, 4 liegen in einer horizontalen Ebene E1 gemeinsamen mit dem Transportstern 2 (vgl. Figur 1). Die erste Greifeinheit 3 weist eine Vielzahl von ersten Aufnahmetaschen 30 auf und die zweite Greifeinheit 4 weist eine Vielzahl von zweiten Aufnahmetaschen 40 auf. Die beiden Greifeinheiten 3, 4 können, wie aus Figur 1 durch den Pfeil A ersichtlich ist, in der gemeinsamen Ebene E1 mit dem Transportstern 2 linear in einer ersten Richtung hin- und herbewegt werden. Weiter können die Greifeinheiten 3, 4 linear in einer zweiten Richtung in der Ebene E1 senkrecht zur ersten Richtung hin und her bewegt werden (Pfeil F). Ferner können die beiden Greifeinheiten 3, 4, wie in Figur 1 durch die Pfeile B angedeutet, senkrecht zur Ebene E1 angehoben und abgesenkt werden. Die beiden Greifeinheiten 3, 4 umfassen jeweils eine nicht gezeigte Antriebseinheit, welche die Linearbewegung der Greifeinheiten 3, 4 in der gemeinsamen Ebene mit dem Transportstern 2 ausführt sowie auch die Hub- und Senkbewegung der Greifeinheiten 3, 4 in Richtung der Pfeile B senkrecht zur Ebene ausführt.

Der Transportstern 2 wird durch einen Antrieb 25 nur in eine Richtung angetrieben, was in den Figuren durch den Pfeil C angedeutet ist.

Die Vorrichtung 1 umfasst ferner eine Zufuhreinrichtung 7, welche die Gegenstände 6 linear in Richtung des Pfeils D zum Transportstern 2 zuführt. Die Gegenstände 6 sind dabei in Reihe angeordnet und werden durch Aufnahme in die ersten und zweiten Aufnahmebereiche 21, 22 am Transportstern 2 auf die notwendige, gewünschte Teilung gebracht.

Ferner umfasst die Vorrichtung 1 eine Abfuhreinrichtung 8, welche in diesem Ausführungsbeispiel dazu eingerichtet ist, Transportbehälter 5 zur Aufnahme einer Vielzahl von Gegenständen 6 zu transportieren. Die Abfuhreinrichtung 8 umfasst ein erstes Transportband 81 und ein parallel dazu zweites Transportband 82. Die Transportbehälter 5 werden auf den Transportbändern 81, 82 in Richtung der Pfeile E bewegt. Um ein Herunterfallen der Transportbehälter 5 von den Transportbändern 81, 82 zu vermeiden, sind Seitenführungen 83, 84 vorgesehen.

Wie aus Figur 1 ersichtlich ist, ist die Abfuhreinrichtung 8 in einer zweiten Ebene E2, parallel zur ersten Ebene E1, welche den Transportstern 2 sowie die erste und zweite Greifeinheit 3, 4 umfasst, angeordnet. Die Zufuhreinrichtung 7 ist ebenfalls in der ersten Ebene E1 angeordnet.

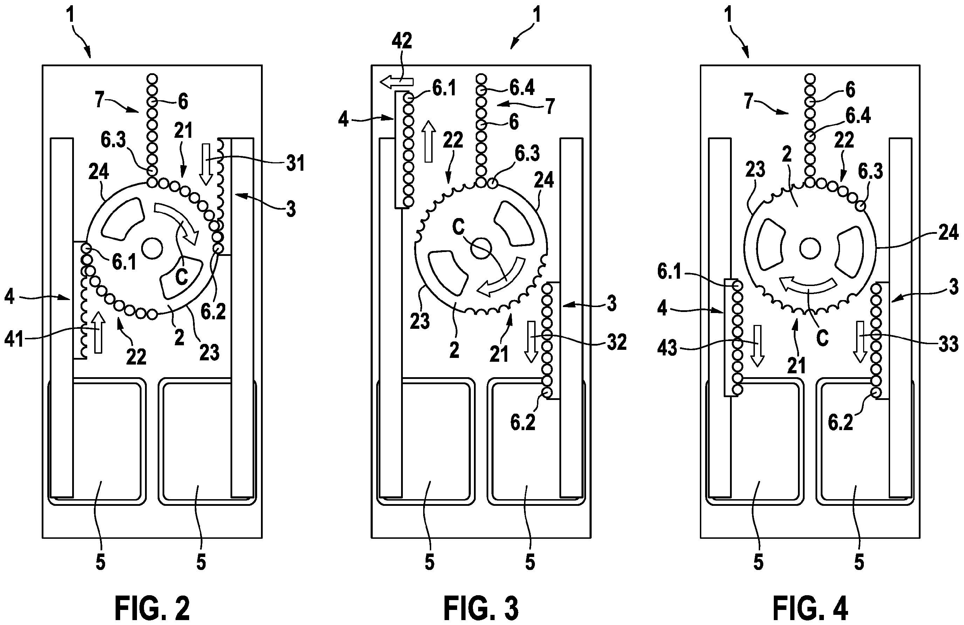

Nachfolgend wird unter Bezugnahme auf die Figuren 2 bis 7 die Funktionsweise der Vorrichtung 1 im Detail beschrieben. Figur 2 zeigt die Ausgangssituation der Vorrichtung, wobei die Gegenstände 6 schon in den beiden Aufnahmebereichen 21, 22 des Transportsterns 2 aufgenommen sind und gerade die Übergabe auf die erste und zweite Greifeinheit 3, 4 erfolgen soll. Wie aus Figur 2 ersichtlich ist, ist dabei die erste Greifeinheit 3 mit ihrer ersten Aufnahmetasche an dem ersten Gegenstand 6.2 im ersten Aufnahmebereich 21 angeordnet. In ähnlicher Weise ist die zweite Greifeinheit 4 mit ihrer ersten Aufnahmetasche am ersten Gegenstand 6.1 des zweiten Aufnahmebereichs 22 angeordnet. Die erste Greifeinheit 3 wird linear in Richtung des Pfeils 31 bewegt. Gleichzeitig wird die zweite Greifeinheit 4 linear entgegengesetzt in Richtung des Pfeils 41 bewegt. Ebenfalls gleichzeitig wird der Transportstern 2 in Richtung des Pfeils C gedreht. Hierdurch werden nacheinander die in dem ersten und zweiten Aufnahmebereich 21 und 22 befindlichen Gegenstände 6 auf die erste und zweite Greifeinheit 3, 4 übergeben.

Zur besseren Verdeutlichung der Übergabewege der Gegenstände 6 sind jeweils die ersten Gegenstände 6 mit zusätzlichen, durch einen Punkt getrennten Kennziffern bezeichnet. So ist der erste Gegenstand am zweiten Aufnahmebereich 22, welcher in die zweite Greifeinheit 4 übergeben werden soll, mit 6.1 bezeichnet. Der erste Gegenstand im ersten Aufnahmebereich 21, welcher auf die erste Greifeinheit 3 übergeben werden soll, ist mit 6.2 bezeichnet. In der Zufuhreinrichtung ist der erste Gegenstand, welcher anschließend wieder auf die zweite Greifeinheit 4 übertragen werden soll, mit 6.3 gekennzeichnet und der erste Gegenstand, welcher auf die erste Greifeinheit 3 beim zweiten Durchlauf übertragen werden soll, ist mit 6.4 gekennzeichnet.

Nachdem die erste Charge der Gegenstände 6 in der ersten und zweiten Greifeinheit 3, aufgenommen ist, wird eine wie in Figur 3 gezeigte Position erreicht. Dabei wird die erste Greifeinheit 3 in Richtung des Pfeils 32 linear weiterbewegt. Die zweite Greifeinheit 4 wird hierbei senkrecht zur ersten linearen Bewegungsrichtung in der Ebene E1 in Richtung des Pfeils 42 seitlich vom Transportstern 2 wegbewegt, um in der nachfolgenden Linearbewegung (Figur 4, Pfeil 43) keine Kollision mit dem Transportstern 2 zu verursachen.

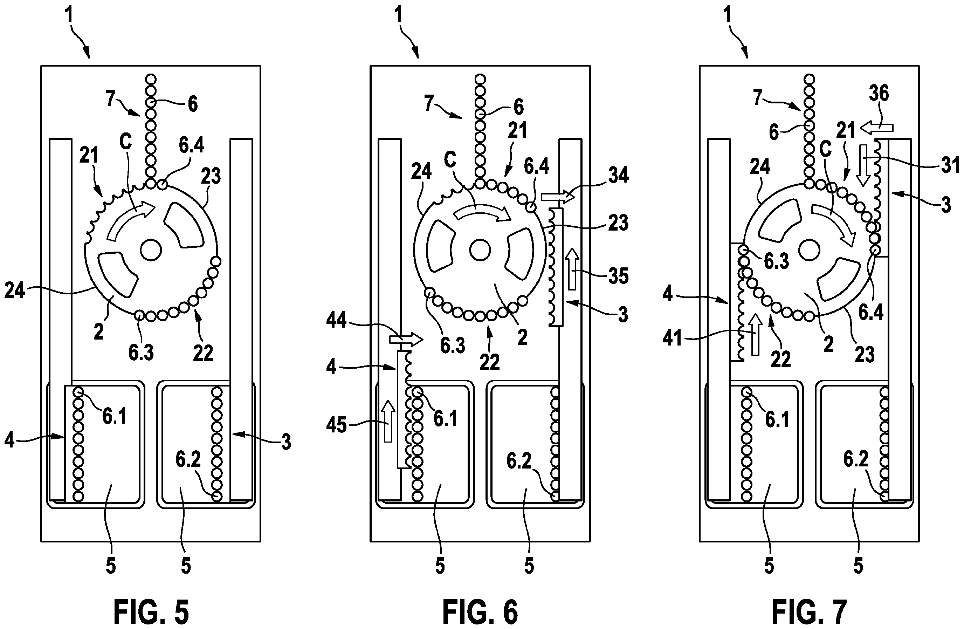

Wie in Figur 4 gezeigt, werden anschließend die beiden Greifeinheiten 3, 4 in Richtung der Pfeile 43 bzw. 33 weiterbewegt, bis beide Greifeinheiten 3, 4 über den jeweiligen Transportbehältern 5 angeordnet sind. Diese Position ist in Figur 5 gezeigt.

Wie weiter aus den Figuren 3 bis 5 ersichtlich ist, wird der Transportstern 2 kontinuierlich in Richtung des Pfeils C weiterbewegt, so dass die nächsten beiden Chargen von Gegenständen in den ersten Aufnahmebereich 21 und den zweiten Aufnahmebereich 22 aufgenommen werden. Die jeweils ersten Gegenstände jeder Charge der Aufnahmebereiche sind mit 6.3 und 6.4 gekennzeichnet. In der in Figur 5 gezeigten Position werden dann die beiden Greifeinheiten 3, 4 auf die zweite Ebene E2 abgesenkt, so dass eine Übergabe der Gegenstände 6 in den Greifeinheiten 3, 4 auf die Transportbehälter 5 erfolgen kann. Die Anzahl der Gegenstände in den Greifeinheiten 3, 4 entspricht dabei einer Anzahl von leeren Positionen in einer Reihe in den Transportbehältern 5.

Wenn die Gegenstände 6 aus den ersten und zweiten Greifeinheiten 3, 4 auf die Transportbehälter 5 übergeben worden sind, werden die Greifeinheiten 3, 4 wieder in die erste Ebene E1 angehoben. Anschließend erfolgt ein seitlicher Versatz der Greifeinheiten (vgl. Figur 6, Pfeile 34, 44). Im Detail wird die erste Greifeinheit 3 in Richtung des Pfeils 34 senkrecht zur ersten Richtung A in der ersten Ebene E1 versetzt und die zweite Greifeinheit 4 wird senkrecht zur ersten Richtung A in Richtung des Pfeils 44 versetzt. Diese seitlichen Versetzungen sind notwendig, damit einerseits bei der ersten Greifeinheit 3 keine Kollision mit dem Transportstern 2 auftritt, wenn die erste Greifeinheit 3 in Richtung des Pfeils 35 wieder linear in die in Figur 2 gezeigte Ausgangsposition bewegt wird, um die nachfolgende Charge von Gegenständen (beginnend mit dem Gegenstand 6.4) wieder aufzunehmen. Die zweite Greifeinheit 4 wird seitlich in Richtung des Pfeils 44 versetzt, damit die zweite Greifeinheit 4 wieder in die Aufnahmeposition der nächsten Charge, beginnend mit dem Gegenstand 6.3 gebracht wird, wie in Figur 7 gezeigt.

Nach dem Versetzen wird die zweite Greifeinheit 4 dabei in Richtung des Pfeils 45 wieder linear zum Transportstern 2 bewegt. Figur 7 zeigt hierbei wieder die Ausgangspositionen der beiden Greifeinheiten 3, 4, wobei die erste Greifeinheit 3 nach dem Vorbeibewegen am Transportstern 2 (Figur 6) wiederum in Richtung des Pfeils 36 seitlich versetzt wird, damit die erste Greifeinheit 3 wieder die Aufnahmeposition für die nachfolgenden Gegenstände erreicht hat. Anschließend werden die beiden Greifeinheiten 3, 4 wieder in Richtung der Pfeile 41, 31 bewegt und nehmen die zweiten Chargen von Gegenständen (gekennzeichnet durch 6.3 und 6.4) auf.

Damit die nächste Charge von Gegenständen in die Transportbehälter 5 platziert werden kann, wird die Abfuhreinrichtung 8 um eine Reihe des Transportbehälters in Richtung der Pfeile E (vgl. Figur 1) bewegt. Beim Befüllen der Transportbehälter sei angemerkt, dass hierbei verschiedene Füllstrategien ausgeführt werden können. Beispielsweise können alle Reihen jedes Transportbehälters 5 von jeweils nur einer Greifeinheit befüllt werden. Alternativ befüllt jede der beiden Greifeinheiten 3, 4 jeweils nur eine Hälfte der Transportbehälter.

Es sei ferner angemerkt, dass die erste und zweite Greifeinheit 3, 4 die Gegenstände beispielsweise mittels eines Saugsystems in den ersten und zweiten Aufnahmetaschen 30, 40 halten kann. Hierdurch kann insbesondere eine sehr schonende Übergabe vom Transportstern 2 auf die beiden Greifeinheiten 3, 4 realisiert werden. Bei Abgabe der Gegenstände aus den beiden Greifeinheiten 3, 4 wird einfach die Saugvorrichtung abgeschaltet, so dass die Gegenstände einfach in den Transportbehältern abgelegt werden können. Weiterhin sei angemerkt, dass der Transportstern 2 bevorzugt ebenfalls die Gegenstände mittels Saugern hält.

Die erfindungsgemäße Vorrichtung 1 wird insbesondere mit sterilisierten Spritzen verwendet. Hierbei ist besonders von Vorteil, dass insbesondere auch die Greifeinheiten 3, 4 aus Materialien hergestellt werden können, welche einfach autoklavierbar bzw. sterilisierbar sind. Wie aus Figur 1 ersichtlich ist, kann durch die Verwendung von zwei Greifeinheiten 3, 4 die Ausbringungsmenge auf die Transportbehälter 5 verdoppelt werden. Dabei benötigt die erfindungsgemäße Vorrichtung kaum einen zusätzlichen Bauraum.

## Patentansprüche

1. Vorrichtung zur Übergabe von Gegenständen (6), umfassend:
- einen Transportstern (2), der sich ausschließlich in einer Richtung (C) dreht, und der mehrere Aufnahmetaschen (20) umfasst, wobei die Aufnahmetaschen (20) in einem ersten Aufnahmebereich (21) und einem zweiten Aufnahmebereich (22) entlang des Umfangs des Transportsterns (2) angeordnet sind, wobei zwischen den beiden Aufnahmebereichen (21,22) jeweils Leerbereiche (23,24) ohne Aufnahmetaschen angeordnet sind,
- eine erste Greifeinheit (3) mit einer ersten Antriebseinheit, und
- eine zweite Greifeinheit (4) mit einer zweiten Antriebseinheit,
- wobei die erste Greifeinheit (3) und die zweite Greifeinheit (4) am Transportstern (2) einander gegenüberliegend angeordnet sind und eingerichtet sind, jeweils eine lineare Bewegung in einer ersten Richtung (A) und eine lineare Bewegung in einer zweiten Richtung (F), welche senkrecht zur ersten Richtung (A) ist, auszuführen und die Gegenstände aufzunehmen und zu übergeben, wobei die lineare Bewegung der zweiten Greifeinheit (4) bei der Aufnahme der Gegenstände (6) linear entgegengesetzt zur ersten Richtung (s) der ersten Greifeinheit (3) bei der Aufnahme der Gegenstände (6) ist, wobei die Gegenstände (6) schon in den beiden Aufnahmebereichen (21,22) des Transportsterns (2) aufgenommen sind und gerade die Übergabe auf die erste und zweite Greifeinheit (3,4) erfolgen soll.

2. Vorrichtung nach Anspruch 1, **dadurch gekennzeichnet, dass** die erste Richtung (A) und die zweite Richtung (F) in einer horizontalen Ebene (E1) liegen.

3. Vorrichtung nach einem der vorhergehenden Ansprüche, **dadurch gekennzeichnet, dass** die erste und zweite Greifeinheit (3, 4) eine Vielzahl von linear in Reihe angeordneten Aufnahmetaschen (30, 40) zur Aufnahme der Gegenstände (6) aufweisen.

4. Vorrichtung nach einem der vorhergehenden Ansprüche, **dadurch gekennzeichnet, dass** die erste Greifeinheit (3) und die zweite Greifeinheit (4) jeweils eine Saugeinrichtung zum Halten der Gegenstände aufweisen.

5. Vorrichtung nach einem der vorhergehenden Ansprüche, **dadurch gekennzeichnet, dass** die erste Greifeinheit (3) und die zweite Greifeinheit (4) eingerichtet sind, sich zusätzlich senkrecht zur ersten und zweiten Richtung zu bewegen, insbesondere senkrecht zur Ebene zu bewegen.

6. Vorrichtung nach einem der vorhergehenden Ansprüche, ferner umfassend eine Zufuhreinrichtung (7), welche eingerichtet ist, Gegenstände (6) in Reihe zum Transportstern (2) zuzuführen.

7. Vorrichtung nach einem der vorhergehenden Ansprüche, ferner umfassend eine Abfuhreinrichtung (8), welche eingerichtet ist, Gegenstände abzutransportieren.

8. Vorrichtung nach Anspruch 7, **dadurch gekennzeichnet, dass** die Abfuhreinrichtung (8) unterhalb einer den Transportstern aufnehmenden Ebene angeordnet ist.

9. Vorrichtung nach einem der vorhergehenden Ansprüche, **dadurch gekennzeichnet, dass** der Transportstern (2) mit einer konstanten Geschwindigkeit angetrieben wird.

## Claims

1. Device for the transfer of objects (6) comprising:
- a star wheel (2) turning exclusively in one direction (C) and having a plurality of receiving pockets (20), the receiving pockets (20) being arranged in a first receiving area (21) and a second receiving area (22) along the circumference of the star wheel (2), wherein empty areas (23, 24) without receiving pockets are arranged between the two receiving areas (21, 22),
- a first gripping unit (3) with a first drive unit, and
- a second gripping unit (4) with a second drive unit,
- wherein the first gripping unit (3) and the second gripping unit (4) are provided at the star wheel (2) opposite to one another, and each are arranged for executing a linear movement in a first direction (A) and a linear movement in a second direction (F) which is perpendicular to the first direction (A), and to pick up the objects and to hand them over, wherein the linear movement of the second gripping unit (4) when picking up the objects (66) is linearly opposite to the first direction (s) of the first gripping unit (3) when picking up the objects (6), wherein the objects (6) are already received in the two receiving areas (21, 22) of the star wheel (2) and the handover to the first and second gripping unit (3, 4) is about to be performed.

2. Device as claimed in claim 1, **characterized in that** the first direction (A) and the second direction (F) lie in a horizontal plane (E1).

3. Device as claimed in one of the preceding claims, **characterized in that** the first and the second gripping unit (3, 4) comprise a plurality of receiving pockets (30, 40) arranged linearly in a row for receiving the objects (6).

4. Device as claimed in one of the preceding claims, **characterized in that** the first gripping unit (3) and the second gripping unit (4) each comprise a suction device for holding the objects.

5. Device as claimed in one of the preceding claims, **characterized in that** the first gripping unit (3) and the second gripping unit (4) are arranged for moving additionally perpendicular to the first and the second direction, in particular for moving perpendicular to the plane.

6. Device as claimed in one of the preceding claims, further comprising a feeding device (7) which is arranged for supplying objects (6) in a row to the star wheel (2).

7. Device as claimed in one of the preceding claims, further comprising a delivery device (8) which is arranged for carrying off objects.

8. Device as claimed in claim 7, **characterized in that** the delivery device (8) is arranged below a plane comprising the star wheel.

9. Device as claimed in one of the preceding claims, **characterized in that** the star wheel (2) is driven at a constant speed.

## Revendications

1. Dispositif de transfert d'objets (6), comprenant :
- un système de transport en étoile (2), qui tourne exclusivement dans une direction (C), et qui comprend plusieurs poches de réception (20), dans lequel les poches de réception (20) sont disposées dans une première zone de réception (21) et une deuxième zone de réception (22) le long de la périphérie du système de transport en étoile (2), dans lequel respectivement des zones vides (23, 24) sans poches de réception sont disposées entre les deux zones de réception (21, 22),
- une première unité de préhension (3) avec une première unité d'entraînement, et
- une deuxième unité de préhension (4) avec une deuxième unité d'entraînement,
- dans lequel la première unité de préhension (3) et la deuxième unité de préhension (4) sont disposées en regard l'une de l'autre sur le système de transport en étoile (2) et conçues pour réaliser respectivement un mouvement linéaire dans une première direction (A) et un mouvement linéaire dans une deuxième direction (F), laquelle est perpendiculaire à la première direction (A), et pour recevoir et pour transférer les objets, dans lequel le mouvement linéaire de la deuxième unité de préhension (4), lors de la réception des objets (6), est opposé de manière linéaire à la première direction (s) de la première unité de préhension (3) lors de la réception des objets (6), dans lequel les objets (6) sont déjà reçus dans les deux zones de réception (21, 22) du système de transport en étoile (2) et le transfert sur les première et deuxième unités de préhension (3, 4) doit s'effectuer précisément à ce moment.

2. Dispositif selon la revendication 1, **caractérisé en ce que** la première direction (A) et la deuxième direction (F) se situent dans un plan horizontal (E1) .

3. Dispositif selon l'une quelconque des revendications précédentes, **caractérisé en ce que** les première et deuxième unités de préhension (3, 4) présentent une pluralité de poches de réception (30, 40) disposées linéairement en rang, destinées à recevoir les objets (6).

4. Dispositif selon l'une quelconque des revendications précédentes, **caractérisé en ce que** la première unité de préhension (3) et la deuxième unité de préhension (4) présentent respectivement un dispositif d'aspiration destiné à retenir les objets.

5. Dispositif selon l'une quelconque des revendications précédentes, **caractérisé en ce que** la première unité de préhension (3) et la deuxième unité de préhension (4) sont conçues pour se déplacer en plus perpendiculairement à la première et deuxième direction, en particulier perpendiculairement au plan.

6. Dispositif selon l'une quelconque des revendications précédentes, comprenant en outre un dispositif d'amenée (7), lequel est conçu pour amener des objets (6) en rang au système de transport en étoile (2).

7. Dispositif selon l'une quelconque des revendications précédentes, comprenant en outre un dispositif d'enlèvement (8), lequel est conçu pour évacuer des objets.

8. Dispositif selon la revendication 7, **caractérisé en ce que** le dispositif d'enlèvement (8) est disposé au-dessous d'un plan recevant le système de transport en étoile.

9. Dispositif selon l'une quelconque des revendications précédentes, **caractérisé en ce que** le système de transport en étoile (2) est entraîné à une vitesse constante.
